Europäisches Patentamt

European Patent Office

Office européen des brevets

(19)

(11) Numéro de publication: **0 280 000**
**A1**

(12) # DEMANDE DE BREVET EUROPEEN

(21) Numéro de dépôt: **87420057.9**

(22) Date de dépôt: **25.02.87**

(51) Int. Cl.⁴ **C04B 11/05**

(43) Date de publication de la demande:
**31.08.88 Bulletin 88/35**

(84) Etats contractants désignés:
**AT BE CH DE ES FR GB GR IT LI LU NL SE**

(71) Demandeur: **Jouve, Jean Charles**
**Place Brun La Rochette**
**F-26220 Dieulefit(FR)**

Demandeur: **Ceccaldi, Jean-Dominique**
**Les Plattes**
**F-26220 Dieulefit(FR)**

(72) Inventeur: **Jouve, Jean Charles**
**Place Brun La Rochette**
**F-26220 Dieulefit(FR)**
Inventeur: **Ceccaldi, Jean-Dominique**
**Les Plattes**
**F-26220 Dieulefit(FR)**

(74) Mandataire: **Maureau, Bernard et al**
**Cabinet GERMAIN & MAUREAU 20, boulevard**
**E. Deruelle B.P. 3011**
**F-69392 Lyon Cédex 03(FR)**

(54) **Procédé de fabrication de l'anhydrite et installation pour sa mise en oeuvre.**

(57) Ce procédé concerne la fabrication de l'anhydrite au départ de sulfate de calcium. Selon ce procédé, l'excès d'acidité du sulfate de calcium est neutralisé en voie sèche par mélange intime du sulfate de calcium broyé et d'une base solide, telle que la chaux, la soude ou la potasse, et la réaction est faite en atmosphère de vapeur d'eau.

Une installation pour la mise en oeuvre de ce procédé comprend successivement une trémie (1) d'alimentation en sulfate de calcium et un silo (2) à chaux ou autre base pulvérulente coopérant avec un tapis sans fin (8) transférant ces produits, indépendamment l'un de l'autre, à une trémie peseuse (10) qui dirige le mélange de ces produits sur une vis sans fin (13) aboutissant à un concasseur (14) dans lequel le mélange concassé est repris par un courant d'air l'amenant, après passage dans un cyclone (16), dans un broyeur (19) alimenté en vapeur d'eau et hors duquel l'anhydrite est évacuée en continu.

## PROCEDE DE FABRICATION DE L'ANHYDRITE ET INSTALLATION POUR SA MISE EN OEUVRE

Quelle que soit son origine, l'anhydrite (Ca SO₄) est avantageusement utilisable comme liant, notamment pour la réalisation de chapes, de planchers et de murs ; une condition est essentielle : le sulfate de calcium doit être rigoureusement neutre.

Or le sulfate de calcium est disponible en très grandes quantités, en tant que résidus de certaines fabrications, mais il est acide. Il en est ainsi par exemple pour le sulface de calcium provenant de la réaction du spath fluor avec l'acide sulfurique suivant la réaction :

$$Ca\,F_2 + H_2\,SO_4 \rightarrow 2\,HF\,Ca\,SO_4$$

Cette réaction est utilisée pour la fabrication de l'acide fluorhydrique et elle donne lieu à la formation d'un sulfate de calcium acide qui constitue actuellement non pas un sous-produit, mais un déchet dont les quantités sont énormes ; il s'agit de centaines de tonnes quotidiennes.

Bien que l'invention ne soit pas limitée à la fabrication d'anhydrite au départ de cette seule source de sulfate de calcium, elle a pour objet un procédé permettant précisément la récupération de ce sulfate de calcium pour la fabrication de l'anhydrite en vue de son utilisation comme liant.

La transformation du sulfate de calcium en anhydrite est connue. Elle nécessite un traitement de neutralisation de l'excès d'acidité du sulfate de calcium par une base, telle que la soude, la potasse ou la chaux.

Dans le procédé selon le DE-B-1.017.518, cette neutralisation est faite en voie sèche, notamment par de la chaux, mais elle exige des températures supérieures à 150°C, ce qui augmente le prix de revient de l'anhydrite. De plus, l'anhydrite obtenue n'est pas de bonne qualité ; en effet elle est difficilement manipulable et, ce qui est grave, ses temps de prise sont très irréguliers.

L'invention remédie à ces inconvénients. Elle a pour objet un procédé qui est dérivé de celui précité, mais dans lequel la neutralisation du sulfate de calcium, faite en voie sèche par mélange intime du sulfate de calcium broyé et d'une base solide, telle que la chaux, la soude ou la potasse, est réalisée en atmosphère de vapeur d'eau à une température relativement basse comprise entre 40 et 120°C.

La durée de contact entre le mélange pulvérulent de sulfate de calcium et de base et la vapeur d'eau est fonction de la granulométrie et de la température de ce mélange. C'est ainsi que, lorsque le sulfate de calcium est récupéré immédiatement à sa sortie d'un four pour la fabrication d'acide fluorhydrique, c'est-à-dire lorsque sa température au moment de la réaction est d'environ 120°C, la durée de traitement par la vapeur d'eau est d'environ 15 minutes ; mais cette durée peut monter à 90 minutes, si la température du sulfate de calcium est plus basse, par exemple 40°C.

Dans tous les cas, la vapeur d'eau peut être introduite dans l'appareil de traitement, ou provenir de la décomposition d'une eau introduite dans l'appareil.

Le procédé objet de l'invention permet de fabriquer de façon très économique une anhydrite de qualités régulières et constantes. Cette économie provient à la fois de la simplicité de ce procédé et du coût très faible des produits mis en oeuvre ; et la qualité de l'anhydrite provient du procédé lui-même.

Quant à l'installation utilisée pour la mise en oeuvre de ce procédé, elle est elle aussi simple, ce qui contribue à l'économie de l'anhydrite fabriquée selon ce procédé.

Suivant une forme d'exécution de l'invention, cette installation comprend successivement une trémie d'alimentation en sulfate de calcium et un silo à chaux ou autre base pulvérulente coopérant avec un tapis sans fin transférant ces produits, indépendamment l'un de l'autre, à une trémie peseuse qui dirige le mélange de ces produits sur une vis sans fin aboutissant à un concasseur dans lequel le mélange concassé est repris par un courant d'air l'amenant, après passage dans un cyclone, dans un broyeur alimenté en vapeur d'eau et hors duquel l'anhydrite est évacuée en continu.

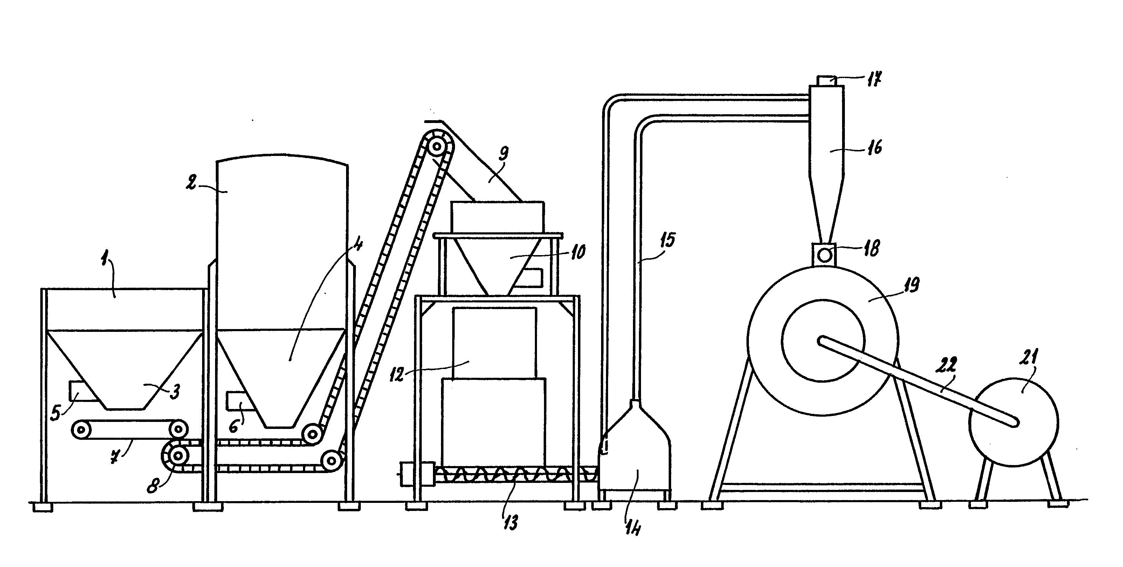

Le dessin schématique annexé représente d'ailleurs, à titre d'exemple non limitatif, une forme d'exécution d'une installation pour la mise en oeuvre du procédé de fabrication d'anhydrite qui fait l'objet de l'invention.

Dans ce dessin, 1 désigne une trémie d'alimentation en sulfate de calcium, et 2 désigne un silo dans lequel est stockée de la chaux. Cette trémie et ce silo sont chacun équipés d'une trémie respectivement 3 et 4 munie d'un vibreur respectivement 5 et 6. Par un petit tapis sans fin 7, la trémie 1 évacue le sulfate de calcium sur un long tapis sans fin 8 qui passe sous la trémie 4 du silo 2 et débouche dans une goulotte 9 qui alimente une trémie peseuse 10. Les alimentations de cette trémie 10 en sulfate de calcium et un chaux sont discontinues. Par les tapis 7 et 8 est en effet admise, dans un premier temps, une certaine quantité de sulfate de calcium. Lorsque la quantité voulue est atteinte, l'alimentation en sulfate de calcium est arrêtée ; et par la trémie 4 et le tapis sans fin 8 est envoyée, dans la trémie peseuse 10, la quantité nécessaire de chaux. Cette quantité est fonction de celle de sulfate de calcium, afin que la neutralisation de l'excès d'acidité du sulfate soit complète. Par la trémie peseuse 10, le mélange dosé de sulfate de calcium et de chaux est envoyé dans un malaxeur 12 situé en dessous de cette trémie ; et le mélange dosé et malaxé est envoyé, par une vis sans fin 13, dans un concasseur latéral 14 d'où ce mélange concassé est dirigé par une canalisation 15 à la partie supérieure d'un cyclone 16. Cet acheminement du mélange concassé depuis le concasseur 14 jusqu'au cyclone 16 est réalisé par un courant d'air produit par un aspirateur 17 situé à la partie supérieure du cyclone 16. A la partie inférieure de ce cyclone est prévue une écluse 18 qui permet l'évacuation des poussières et des déchets ultrafins et dirige le mélange concassé de sulfate de calcium et de chaux dans un broyeur horizontal à boulets 19.

Dans ce broyeur 19 qui travaille en continu est envoyée de la vapeur d'eau provenant d'un générateur 21 raccordé au broyeur par une canalisation 22. C'est dans ce broyeur 19 que se font simultanément le concassage fin du sulfate de calcium, le mélange très intime de ce sulfate avec la chaux et la réaction de ce mélange avec la vapeur d'eau. Le broyeur 19 sert donc simultanément de réacteur. L'anhydrite est évacuée en continu à l'une des extrémités du broyeur.

Comme il va de soi, l'invention ne se limite pas à la seule forme d'exécution de cette installation pour la fabrication d'anhydrite qui a été ci-dessus décrite à titre d'exemple ; elle en embrasse, au contraire, toutes les variantes de réalisation, quelles que soient notamment : la nature de la base utilisée pour la neutralisation de l'excès d'acidité du sulfate de calcium, et l'origine de ce sulfate ; c'est ainsi notamment qu'entre autres, ce sulfate de calcium peut provenir non pas du traitement du spath fluor en vue de la production d'acide fluorhydrique, mais de la désulfurisation des fumées de centrales thermiques.

**Revendications**

1 - Procédé de fabrication de l'anhydrite par neutralisation de l'excès d'acidité du sulfate de calcium constituant un résidu de fabrication de l'acide fluorhydrique, par mélange intime et en voie sèche de ce sulfate broyé et d'une base solide, telle que la chaux, la soude ou la potasse, caractérisé en ce que cette neutralisation est faite en atmosphère de vapeur d'eau, à une température relativement basse comprise entre 40 et 120°C.

2 - Procédé de fabrication de l'anhydrite selon la revendication 1, caractérisé en ce que la durée de contact entre le mélange pulvérulent de sulfate de calcium et de base et la vapeur d'eau est fonction de la granulométrie et de la température de ce mélange.

3 - Procédé de fabrication de l'anhydrite selon l'une quelconque des revendications 1 et 2, caractérisé en ce que la vapeur d'eau est introduite dans l'appareil dans lequel le mélange intime et fin de sulfate de calcium et de base est réalisé.

4 - Procédé de fabrication de l'anhydrite selon l'une quelconque des revendications 1 et 2, caractérisé en ce que la vapeur d'eau réagissant avec le mélange intime de sulfate de calcium et de base provient de la décomposition d'une eau introduite dans l'appareil de mélange.

5 - Installation pour la mise en oeuvre du procédé de fabrication de l'anhydrite selon les revendications 1 à 4, caractérisé en ce qu'elle comprend successivement une trémie (1) d'alimentation en sulfate de calcium et un silo (2) à chaux ou autre base pulvérulente coopérant avec un tapis sans fin (8) transférant ces produits, indépendamment l'un de l'autre, à une trémie peseuse (10) qui dirige le mélange de ces produits sur une vis sans fin (13) aboutissant à un concasseur (14) dans lequel le mélange concassé est repris par un courant d'air l'amenant, après passage dans un cyclone (16), dans un broyeur (19) alimenté en vapeur d'eau et hors duquel l'anhydrite est évacuée en continu.

0 280 000

| | Office européen | **RAPPORT DE RECHERCHE EUROPEENNE** | Numero de la demande |
| | des brevets | | EP 87 42 0057 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl 4) |
|---|---|---|---|
| Y | US-A-2 959 466 (H. REIMERS) <br> * Colonne 4, revendications 1-9 * | 1 | C 04 B 11/05 |
| | --- | | |
| Y | US-A-1 821 961 (J.E. BUTLER) <br> * Page 4, revendications 1,2 * | 1 | |
| | --- | | |
| D,A | DE-B-1 017 518 (BADISCHE BAU- UND KUNSTSTOFF GmbH) | | |
| | --- | | |
| A | DE-A-2 330 728 (BAYER) <br> * Page 19, revendications 1,2 * | 1,4 | |
| | --- | | |
| A | FR-A-2 076 260 (SOCIETE PROGIL ET SOCIETE CIMENTS LAFARGE) | | |
| | ----- | | |

**DOMAINES TECHNIQUES RECHERCHES (Int. Cl.4)**

C 04 B

Le présent rapport de recherche a été établi pour toutes les revendications

| Lieu de la recherche <br> LA HAYE | Date d'achèvement de la recherche <br> 23-10-1987 | Examinateur <br> LIBBERECHT-VERBEECK |
|---|---|---|